# EUROPEAN PATENT SPECIFICATION

(11) **EP 2 922 605 B1**
(45) Date of publication and mention of the grant of the patent: **18.09.2019**
(21) Application number: 13857495.9
(22) Date of filing: 25.11.2013
(51) Int. Cl.: B01D 17/028, B01D 17/025, B01D 11/04, E03F 5/16

(54) **IMPROVED ECONOMICAL WASTE REMOVAL SYSTEM FOR FAT, OIL, AND GREASE**
VERBESSERTES WIRTSCHAFTLICHES ABFALLENTSORGUNGSSYSTEM FÜR FETT, ÖL UND SCHMIERFETT
SYSTÈME PERFECTIONNÉ D'ÉLIMINATION ÉCONOMIQUE DES DÉCHETS POUR GRAISSES, HUILES ET DE CORPS GRAS

(30) Priority: 26.11.2012 US 201261729681 P
(43) Date of publication of application: 30.09.2015
(73) Proprietor: Thermaco, Inc., Asheboro, NC 27204 (US)
(72) Inventor: BATTEN, William C., Asheboro, NC 27204-2548 (US); KYLES, Bruce W., Asheboro, NC 27204-2548 (US)
(74) Representative: Bankes, Stephen Charles Digby
(86) International application number: PCT/US2013/071693
(87) International publication number: WO 2014/082037

(56) References cited:
- WO-A1-2011/079316
- GB-A- 2 374 352
- JP-A- 2002 059 156
- US-A- 5 993 646
- US-A1- 2007 251 879
- US-A1- 2010 122 954
- US-A1- 2011 297 626
- US-B1- 7 186 346
- US-B2- 7 481 321

## Description

### Background

The present invention relates generally to a low cost assembly and method for removal, storage and disposal of fats, oil, grease waste and, more particularly, to a system for separation of fat, oil, and/or grease from an effluent flow from a sink, permitting the passage of grey water to a sewage line. Also a method of making such assembly is claimed.

Over the past thirty years there has been a move towards requiring food- handling facilities to have sufficient systems for servicing kitchen grease and solid waste bearing water flows. One of the largest problems, in terms of sewer system lines clogging, has been the fats, oils and grease put into the sewer system from food handling facilities. These problems and the increase in the severity of the situation in the recent past has led more and more sewer authorities to implement fats, oils, grease (hereinafter referred to as "F.O.G.") control programs. The object of many of these programs is to ensure that food handling facilities remove as much as possible of the F.O.G. from the effluent flow, thereby releasing only grey water and solids into the sewage system.

F.O.G. removal systems are generally well known. For example, JP 2002059156 discloses an F.O.G removal system comprising a container having an inlet and outlet wherein the outlet discharges grey water from the container. There has, however, been a movement toward accomplishing removal in kitchen facilities through use of a container including one or more rotating disks formed of a plastic or like material to which oil and grease contaminants are attracted. Typically, the rotation of the disk, in at least partially immersed conditions, allows the oil to cling to the disk, so that the oil and grease is removed from the body of the water upon rotation of the disk. A scraper is typically used to force the oil and grease contaminants from the opposite sides of the disk and to channel such contaminants into an attached storage collection unit.

The above-mentioned types of devices are assembled within rigid containers and the rotating disks are in fixed positions. The scraper assemblies are also in fixed rigid positions. This may make servicing of the apparatus difficult, particularly since the parts to be serviced have been covered in grease and oil. In addition, the units may have been permanently installed in a plumbing system so field service is often
required. Because of the nature of installation, the field service can be difficult. Also, because many of the parts are coated with F.O.G., servicing can be messy and time consuming. Purchase of these systems tends to be expensive and represents a significant capital investment.

As an alternative, devices without scraper assemblies have been developed so that separation of F.O.G. and water occurs within a tank sufficient to also suffice as a storage container. These devices avoid many of the difficulties associated with the skimmer system; however, they are still expensive, difficult and messy, particularly when the storage container is full and must be emptied. These units are often too large in size to fit inside kitchen facilities so a space to accommodate the assembly size must be available for the larger separator to work. Many of these types of systems may still utilize more costly pumping apparatus for F.O.G. separation or sensing systems for accurately becoming aware of when the storage container is full. Knowing when to empty the storage container is a problem since it is often unclear how much water versus how much F.O.G. is being retained within the storage container.

Applicant addressed some of these concerns with its more economical waste removal system, described in U.S. Patent No. 8,273,255 to Batten. However, the F.O.G. transfer mechanism in Batten remains subject to clogging and messiness.

The process of emptying a removable storage container is known to be very messy. If the tank and storage container are attached so that leakage does not occur when the F.O.G. is passed to a storage container, then removing the storage container for disposal is often complicated and dirty. This is undesirable as it limits who can empty the storage container. Often, emptying the storage container occurs in a facility, such as a restaurant, held to certain cleanliness standards. Size, cost, ease of use and mess are all factors that may limit consumers access to and usage of F.O.G. separation assemblies.

Accordingly, there is a need in the art for an improved method and system for separation of F.O.G. from wastewater that is simple, space saving in design, low in cost and that minimizes the mess/difficulty associated with the storage container. In addition, there is a need in the art for a low cost apparatus that does not require significant capital outlay.

### Summary of the Invention

The present invention fulfills one or more of these needs in the art by providing an improved economical F.O.G. removal assembly which is low in cost, conservative in size, easy to install, easy to maintain, and minimizes the mess associated with discarding accumulated and stored F.O.G.

Accordingly, one aspect of the present invention is to provide a F.O.G. removal assembly for use in kitchens, including: a container having a bottom, a top, at least one sidewall, an inlet to receive an influent flow of F.O.G. and water from a drain, and an outlet for discharging grey water from the container, wherein the inlet and outlet are spaced above the bottom and below the top, a removable storage tank mating with the container and arranged to accept F.O.G. floating on water in the container that flows out of the container, an outlet baffle arranged to direct grey water from a bottom portion of the container out of the container via the outlet, a valve in the container at an elevation such that the F.O.G. floating on water in the container flows out of the container through the valve when an effluent level in the container is raised above the valve level and the valve is opened, a valve control for alternating the valve between an open and closed position, and a portal on the storage tank interfacing with the valve. The container may include at least one baffle extending within the container at a level below the static water level to allow water to flow below the baffle from the inlet to the outlet but retaining F.O.G. floating on the water. The assembly may also include an inlet baffle. The inlet baffle directs the influent from the sink drain into the inlet

The present invention may also be considered a method of removing F.O.G. from effluent including connecting a kitchen drain to an inlet of a container, connecting a sewage drain to an outlet in the container, the outlet being located on the container to define a static water level for liquid in the container, the container also comprising an outlet baffle arranged to direct grey water from a bottom portion of the container out of the container via the outlet, interfacing a portal on a storage tank with a valve on the container, discharging effluent water containing F.O.G. from the kitchen drain into the inlet, holding the effluent water containing F.O.G inside the container for a period to allow F.O.G. to float to the top of the contained effluent water, permitting grey water to flow from the container outlet to the sewage drain, intermittently discharging floating F.O.G. through the valve in the container and into the storage tank,
separating the interface between the valve and the portal by replaceably removing the storage tank, emptying the F.O.G. stored in the storage tank, replacing the storage tank next to the container, and reestablishing the interface between the valve and the portal. The method may further include monitoring a sight glass on the container to determine when the F.O.G. level within the container is sufficient to warrant emptying. A further aspect of the invention is a method of making a grease removal assembly as defined in appended claim 12.

These and other aspects of the present invention will become apparent to those skilled in the art after a reading of the following description of the preferred embodiment when considered with the drawings.

### Brief Description of the Drawings

Figure 1 is a front perspective view of an embodiment of the invention;
Figure 2 is a front view of an embodiment of the invention;
Figure 3 is a side view of an embodiment of the invention;
Figure 4 is cut away view of an embodiment of a container;
Figure 5a is a cross-sectional bottom view of an embodiment of the container with the storage tank removed;
Figure 6a is a top perspective view of an embodiment of the storage tank;
Figure 6b is a front perspective view of an embodiment of the container with the lid removed; and
Figure 7 is a cross sectional view of an embodiment of the invention.

### Description of the Exemplary Embodiments

In the following description, like reference characters designate like or corresponding parts throughout the several views. Also in the following description, it is to be understood that such terms as "forward," "rearward," "left," "right," "upwardly," "downwardly," and the like are words of convenience and are not to be construed as limiting terms.

It will be understood that the illustrations are for the purpose of describing a preferred embodiment of the invention and are not intended to limit the invention thereto.

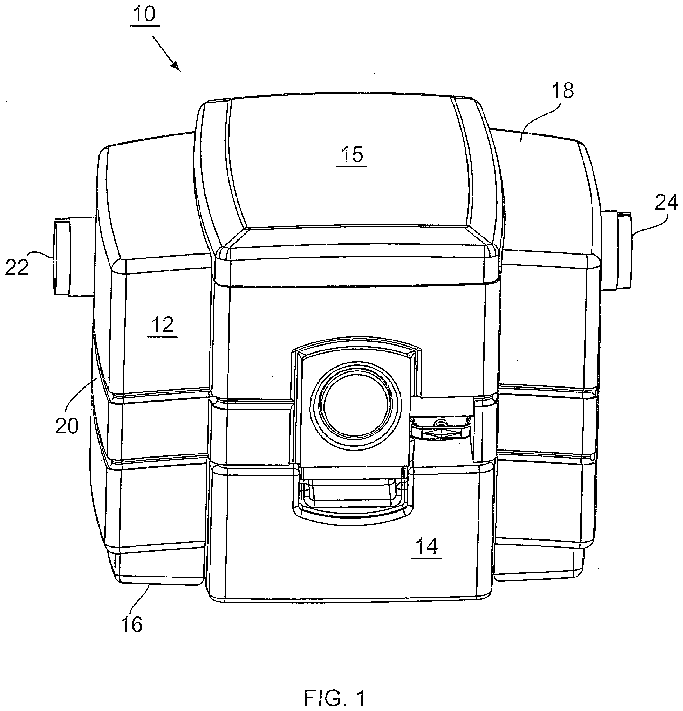

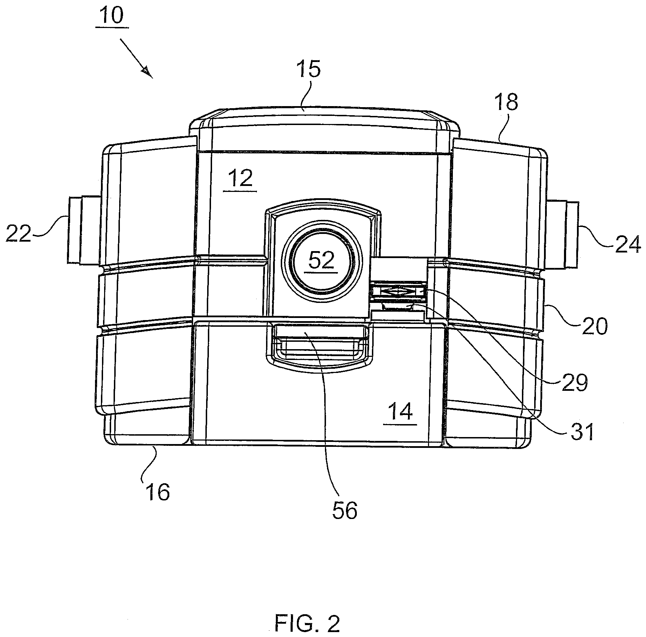

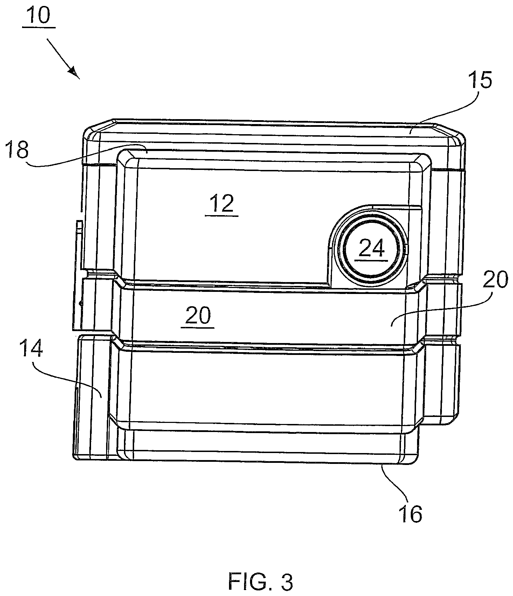

Figures 1 - 4, generally, show an improved economical fat, oil and grease (F.O.G.) waste removal assembly, generally designated 10, constructed according to the present disclosure. The assembly 10 separates F.O.G. from effluent and is sized to fit inside kitchen or other facilities and provides storage for the separated F.O.G., however, it does not need a scraper apparatus or electronic sensors in order to function properly. The design makes the F.O.G. removal assembly extremely economical and size conscious and, in addition, simplifies the F.O.G. transfer and storage, reducing the mess usually associated with F.O.G. separation and storage units.

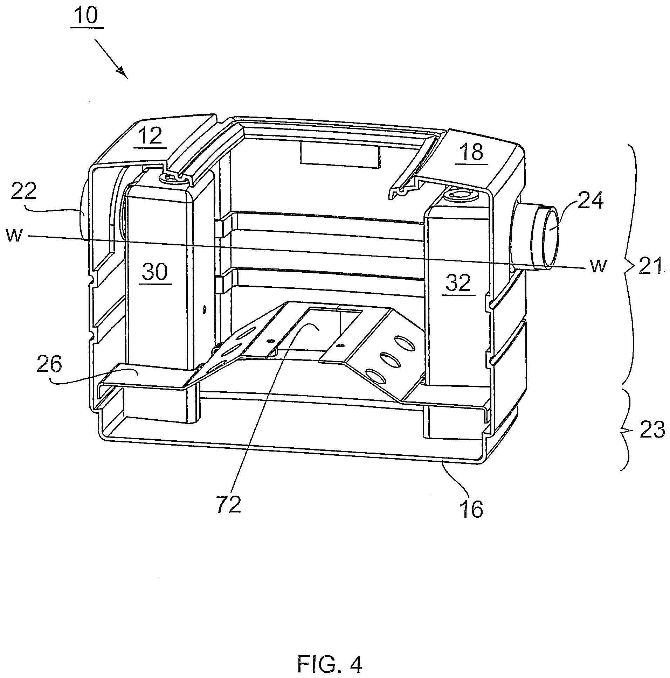

One embodiment of assembly 10 includes a container 12 and a storage tank 14. Container 12 and tank 14 are preferably constructed of rotomolded plastic, although they may be constructed of other suitable material or methods as well. The container 12 includes a bottom 16, a top 18, at least one sidewall 20, and an inlet 22 to receive an influent flow of F.O.G. and water from a sink drain. The container also includes an outlet 24, for discharging grey water from the container 12. Preferably, a sight glass 52 is positioned on the front wall of container 12, above a handle 56, discussed below. Container 12 may also include a removable lid 15. Figure 4 is a cut-away view of one embodiment of the container 12, with the lid 15 removed.

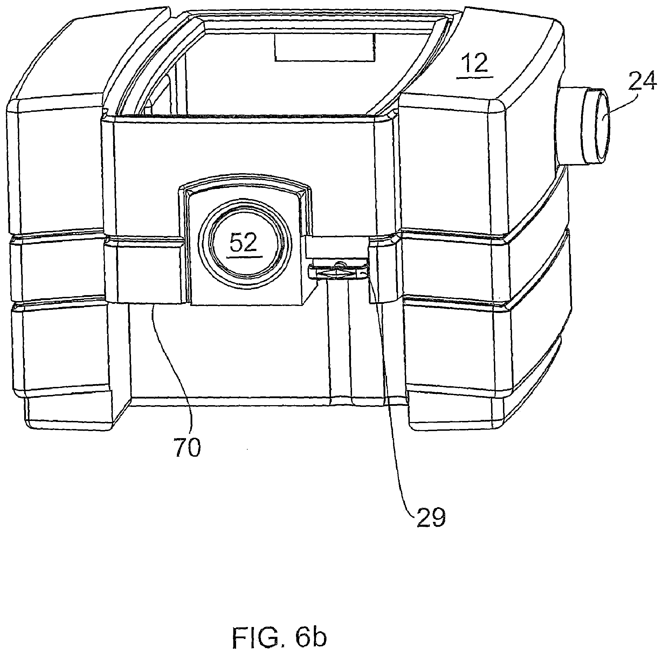

As seen in Figure 6b, the front wall of container 12 has a recess, that includes an overhang 70 that the tank 14 typically fits under, with the portal 36 of tank 14 lined up under an outlet 27 normally closed by a valve 28.

Figure 4 shows an inlet baffle 30 that directs influent from the sink drain (not shown) and the inlet 22 downward and into a bottom portion 23 of the container. An outlet baffle 32 directs the grey water from the bottom portion 23 out of the container 12 via outlet 24 and to a drain pipe (not shown) to a sewer. The outlet 24 is located above the bottom 16 and below the top 18, so that the bottom of the outlet 24 defines a static water level W for liquid in the container 12.

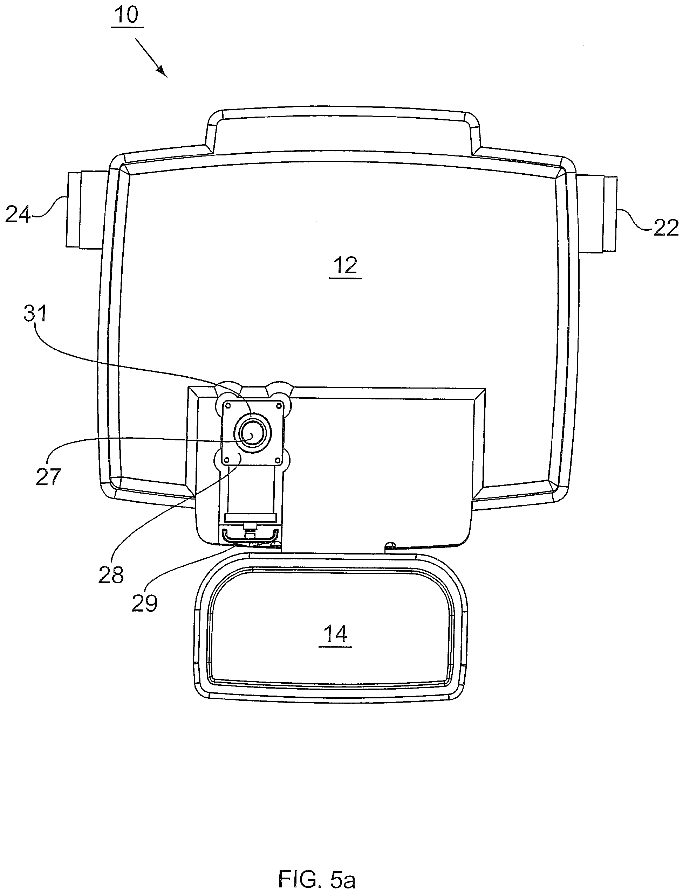

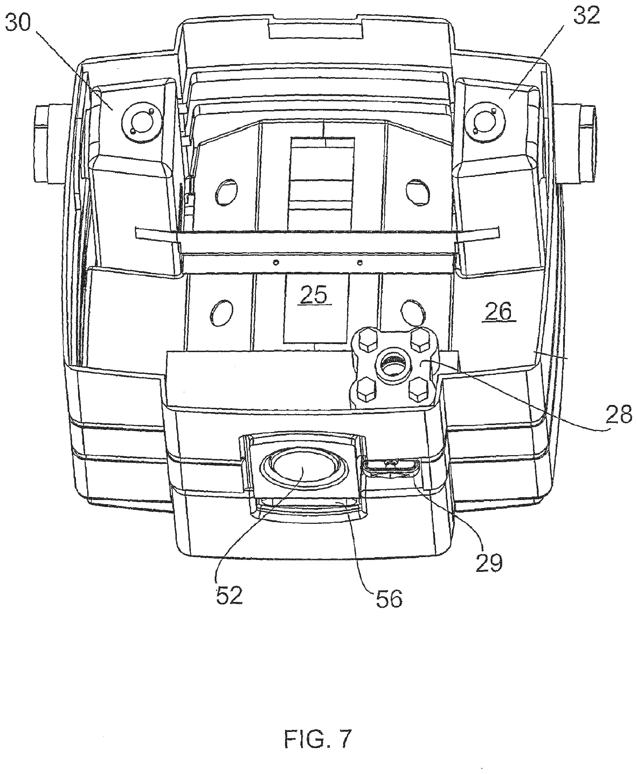

The container also includes a valve 28, shown in Figure 5a, at an elevation in the container 12 such that F.O.G. floating on water in the container 12 can flow from the container 12 out through the valve 28 when the liquid level in the container is raised above the valve inlet and the valve is opened by pulling handle 29 forward in the view of Figure 7.

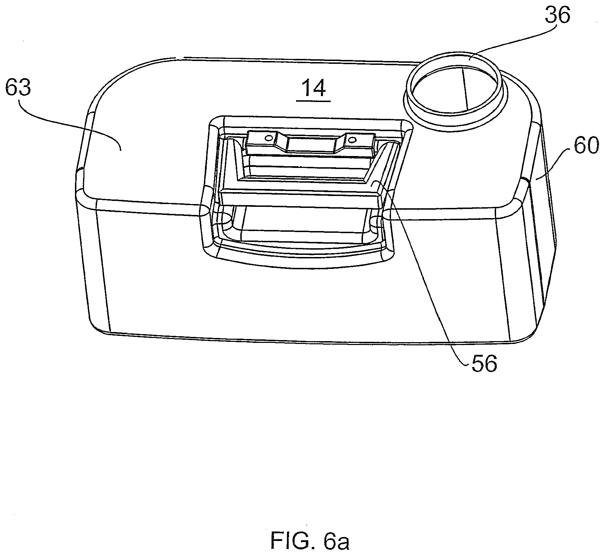

Figure 6a shows a storage tank 14 arranged to accept F.O.G. and water that flows out of the container 12 through the valve 28 when the liquid level in the container 12 is raised above a valve inlet and the valve pull 29 is engaged to open the valve. The storage tank 14 includes a raised portal 36 that interfaces with the valve 28. The valve 28, by way of example, is a linearly opening valve configured to reliably seal closed, even with a head of water above it. Valve 28 may include a funnel 31 to direct effluent neatly into tank 14 without spilling across the valve inlet and onto the outer valve edges.

Container 12 has a raised height above the static water level W, which permits a significant rise and fall of fluid level within the container 12, typically caused by an input volume level greater than that allowed by the outlet baffle 32. Surging water flows (increasing the volume of fluid through a drain pipe, and thus through attached F.O.G. separation units) are not unusual. Such circumstances occur when a sink full of water is released at once when the sink's drain stopper is removed. This volume enters the container 12 through inlet 22, raising the water height above the static water level W, at least briefly. F.O.G. is lighter than water and rises to the top of the fluid in the container 12 by the force of gravity. Applicant's experience teaches that a strong effluent flow directly alongside stratified fluids can peel separated F.O.G back into the waste
water. In this embodiment, the divider 26 shields the raised F.O.G. from that strong effluent flow.

The F.O.G. waste removal assembly 10 is typically connected to a kitchen sink (not shown). However, other sources of effluent providing intermittent flows may be connected to assembly 10. The fluid separation process of the invention is applicable to input sources of F.O.G. and water that provide intermittent flows. Together, these sources are referred to herein as "sinks."

Typically, inlet baffle 30 and inlet 22 receive an influent flow of F.O.G. and water from a sink drain. Outlet 24 and outlet baffle 32 discharge grey water from the container 10. The bottom of outlet baffle 32 is spaced above the bottom 16. Any heavy solids may be allowed to sink to the bottom of container 12, where they may be flushed down stream through outlet 24 if the effluent flow is great enough. Container 12 may also include a clean out port or lid through which solid waste materials may be removed when the solids settle on the bottom 16, or to otherwise access the interior in case servicing or cleaning is needed.

One or more dividers 26 may extend across the container 12, extending partially or fully from inlet baffle 30 to outlet baffle 32 at a level below the static water level to allow solids and water to flow below the divider 26 from the inlet 22 to the outlet 24. Divider 26 typically is located toward the lower portion 23 of the container 12 so that incoming fluids pass below the divider 26. As fluids enter the container 12 from inlet baffle 30, the fluids will usually have residence time within the container 12 long enough for the lighter F.O.G. to rise and separate from the remaining waste fluids. The F.O.G. stratifies to form a top layer on the waste fluids and pass through opening 72 in divider 26 toward the top of the container 12. The divider 26 may have a slope upward toward an opening 72 so that the F.O.G. floats upward toward and through opening 72 so the divider 26 shields the F.O.G. from the grey water flow along the bottom 23. The F.O.G. layer typically will accumulate above divider 26 and remain substantially undisturbed and retained within the upper container portion 21.

Valve 28 is placed at an elevation within the container 12, typically above but close to the divider height, such that F.O.G. floating on the water in container 12 can flow from container 12 out through valve 28 when the F.O.G. level in the container is raised.

As shown in Figure 7, inlet baffle 30 and outlet baffle 32 may be interchangeable and are typically constructed the same, as mirror images of each other. Therefore, the inlet 22 may serve as the outlet 24 and vice versa so that the apparatus 10 may be oriented according to the accommodations of the area surrounding the waste water piping and to accommodate a variety of kitchen drain and sewage line angle configurations.

Effluent flow from a sink drain enters inlet baffle 30 and flows out of the lower portion of the baffle. Effluent flows as it exits the inlet baffle 30 below the stratification taking place in the upper container 21, so that any stratified F.O.G. is minimally disturbed by any strong currents in the incoming effluent flow. The flow travels into the body of the container, where substantial separation of F.O.G. and grey water occurs. A portion of the grey water continues below the divider 26 while F.O.G. floats to the top and is gathered into upper container 21. The grey water flows under and out of outlet baffle 32 and exits container 12 into the sewage drain via the outlet baffle 32, and may carry solids with it.

Storage tank 14 of assembly 10 is best seen in Figure 6a. Storage tank 14 is preferably constructed of roto-molded plastic; however, other materials and methods can be used such as injection molding, metal stamping or other techniques. In one embodiment, strengthening ribs 60 may be provided for adding strength and stability to the walls of the storage tank 14. This may be helpful in the rotomolded embodiment. Storage tank 14 includes a portal 36 for interfacing with valve 28. Typically, portal 36 is positioned below valve 28. Wheels may be added on the bottom of the tank 14 if desired to aid in its transport when full.

F.O.G. floating on the water, and some portion of water, in some examples, may become visible in sight glass 52. The F.O.G. layer builds on top of the waste water, and as the F.O.G. builds, the boundary layer between F.O.G. and water creeps downward and may become visible in sight glass 52. The user determines when to reduce the F.O.G. layer, typically when the F.O.G layer is visible in most of sight glass 52. The user activates or retracts the valve pull 29, opening the valve between the container 12 and storage tank 14. The height of the valve 28 allows the F.O.G. to flow out through open valve 28 and into storage tank 14. The interaction between portal 36 and guide funnel 31 prevents leakage of F.O.G. or water as they pass from the container 12 to storage tank 14 by forming a substantially water-tight barrier. The storage tank 14 is of sufficient size, relative to the container 12 size, so that the amount of F.O.G. and/or fluid able to reside in the container 12 above the valve level (at static effluent level W) does not exceed the volume of the tank 14, and thus the amount able to flow into the tank 14 when valve 28 is opened. Emptying F.O.G. into storage tank 14 usually will occur when the level of fluid and F.O.G. in the container is at a static water level W. When the desired amount of F.O.G. has emptied from the container 12 into the tank 14, the user closes the valve, for example, by replacing the valve pull 29 to its original position.

When storage tank 14 is to be emptied of F.O.G., the tank is removed by pulling forward on handle 56 and releasing the tank 14 from the container.

A F.O.G. level sight glass may be included in storage tank 14, as well as container 12, allowing easy visualization of the F.O.G./water content. Sight glasses may prevent unnecessary and premature emptying of container 12 and/or storage tank 14 and easy viewing of the F.O.G. and water levels within the storage tank 14 by inspectors or operators.

While the prior art has supplied F.O.G. storage containers that may be emptied and reused, there remains a need for such a removable storage container that minimizes clogging, the difficulty and mess that has come to be associated with such containers. The valve interface for emptying the container F.O.G. content into the storage tank addresses the need of simplifying the F.O.G. storage and transfer process. While Applicant's invention minimizes the mess when fluids are transferred to and from the storage tank 14, the design of the tank also accomplishes easy and mess free emptying. When emptying is required, a pull handle 56 may be used for separating the tank 14 from the container, which pulls the tank 14 free of the container 12.

Handle 56 (see Figure 6a) may be used for transporting storage tank 14 to empty the accumulated F.O.G. Carry handle 56 may be located on the top 63 of storage tank 14 and toward the same side as the portal 36. This places the center of gravity of storage tank 14 so that the weight distribution of the loaded tank 14 pivots the portal 36 upwards when tank 14 is lifted by handle 50. With portal 36 skewed upward, F.O.G. is not inclined to spill or leak out of the storage tank 14. Wheels may be oriented in any direction to allow storage tank 14 to roll at various angles. Portal 36 may also be used as a pour spout, allowing ease of discarding stored F.O.G. These features provide a clean and effective way to dispose of stored F.O.G. without the mess usually associated with F.O.G. tank emptying.

In one embodiment, the container 12 may be substantially enclosed in a separator wrap. The separator wrap has openings through which the inlet baffle 30 and the outlet baffle 32 connect to the sink and sewer drain. There is also a fitted hole through which the guide funnel 31 passes to allow the funnel to interface with portal 36. Storage tank 14 may remain outside of the separator wrap so that it may be easily accessed for F.O.G. disposal.

The invention may also be considered a method of removing F.O.G. from effluent. Steps involved include connecting a kitchen drain (not shown) to an inlet 22 or inlet baffle 30 of a container 12 and connecting a sewage drain (not shown) to an outlet 24 or an outlet baffle 32 in the container 12. The method also includes placing a removable storage tank 14 with a container 12, interfacing a portal 36 on a storage tank 14 with a valve 28 on the container 12. Effluent water containing F.O.G. from the kitchen drain discharges into the inlet 22. The effluent water containing F.O.G is held inside the container 12 for a period to allow F.O.G. to float to the top of the contained effluent water, and grey water flows (i.e. effluent water from which F.O.G. has been depleted) from the container outlet 24 to the sewage drain. The valve pull 29 is engaged to open the valve 28 and F.O.G. is drained into the storage tank 14. The method may include monitoring a sight glass 52 on the storage tank 14 to determine when the F.O.G. level within the tank 14 is sufficient to warrant emptying, emptying the F.O.G. stored in the storage tank 14 and reestablishing the interface between the portal 36 and the valve 28.

Certain modifications and improvements will occur to those skilled in the art upon a reading of the foregoing description. The invention and the desired modifications thereto are included in the appended claims.

## Claims

1. An economical fat, oil, and grease (F.O.G.) removal assembly (10) for use in kitchens, comprising:
a container (12) having a bottom (16), a top (18), at least one sidewall (20), an inlet (22) to receive an influent flow of F.O.G. and water from a drain, and an outlet (24) for discharging grey water from the container (12), wherein the inlet (22) and outlet (24) are spaced above the bottom (16) and below the top (18), and
a removable storage tank (14) mating with the container and arranged to accept F.O.G. floating on water in the container that flows out of the container,
**characterised by**:
an outlet baffle (32) arranged to direct grey water from a bottom portion (23) of the container (12) out of the container (12) via the outlet (24),
a valve (28) in the container (12) at an elevation such that the F.O.G. floating on water in the container flows out of the container through the valve when an effluent level in the container is raised above the valve level and the valve is opened,
a valve control (29) for alternating the valve between an open and closed position, and
a portal (36) on the storage tank interfacing with the valve.

2. The assembly (10) according to claim 1, further including at least one divider (26) extending across the container (12) at a level below the static water level to allow water to flow below the divider from the inlet (22) to the outlet (24) but retaining F.O.G. floating on the water.

3. The assembly (10) according to any preceding claim, further including an inlet baffle (30) directing the influent from the drain into the container.

4. The assembly (10) according to any preceding claim, wherein the storage tank (14) is made of rotomolded plastic and has vertical strengthening ribs (60).

5. The assembly (10) according to any preceding claim, wherein the container includes a clean out port and has horizontal strengthening ribs.

6. The assembly (10) according to any preceding claim, wherein the valve control (29) is a valve pull (29) for opening and closing the valve.

7. The assembly (10) according to any preceding claim, wherein at least one of the container (12) and the storage tank (14) includes a F.O.G. level sight glass (52).

8. The assembly (10) according to any preceding claim, wherein the storage tank (14) includes a carrying handle (56) on the top (63) of the storage tank (14), arranged distal to the center of gravity of the storage tank toward the front of the storage tank, wherein picking the storage tank up by the carrying handle skews the weight of the stored F.O.G., tilting the portal upwardly in order to avoid spilling the enclosed F.O.G. through the portal.

9. A method of removing fat, oil, and grease (F.O.G.) from effluent comprising:
connecting a kitchen drain to an inlet (22) of a container (12),
connecting a sewage drain to an outlet (24) in the container (12), the outlet being located on the container to define a static water level for liquid in the container, the container also comprising an outlet baffle (32) arranged to direct grey water from a bottom portion (23) of the container (12) out of the container via the outlet (24),
placing a removable storage tank (14) next to the container,
interfacing a portal (36) on a storage tank with a valve (28) on the container,
discharging effluent water containing F.O.G. from the kitchen drain into the inlet, holding the effluent water containing F.O.G inside the container for a period to allow F.O.G. to float to the top of the contained effluent water,
permitting grey water to flow from the container outlet to the sewage drain, intermittently discharging floating F.O.G. through the valve in the container and into the storage tank, separating the interface between the valve and the portal by replaceably removing the storage tank,
emptying the F.O.G. stored in the storage tank,
replacing the storage tank next to the container, and
reestablishing the interface between the valve and the portal.

10. The method of removing F.O.G. from effluent of claim 9, further including picking up the storage tank (14) by a carrying handle (56) arranged away from the center of gravity and toward the portal so that the weight of the stored F.O.G., tilts the storage tank so the portal points upwardly to avoid spilling the enclosed F.O.G.

11. The method of removing F.O.G. from effluent of claim 9 or 10, further including monitoring a sight glass (52) on the container (12) to determine when the F.O.G. level within the storage tank (14) is sufficient to warrant emptying the accumulated F.O.G. into the storage tank.

12. A method of making a grease removal assembly (10) comprising:
molding a container (12) having a bottom (16), a top (18), and at least one sidewall (22);
forming an outlet (24) spaced above the bottom (16) and below the top (18) and an inlet (22) spaced above the bottom and below the top, wherein the inlet is adapted to receive water from an influent flow of F.O.G. and the outlet is adapted to allow grey water to discharge from the container; and
molding a removable storage tank (14) with a portal (36) for receiving F.O.G. from the container; fitting the storage tank to be mated with the container;
**characterized by**:
molding an upwardly shaped divider (26) having an opening at an apex;
installing in the container an inlet baffle (30) and an outlet baffle (32) arranged to direct grey water from a bottom portion (23) of the container (12) out of the container (12) via the outlet (24);
inserting the upwardly shaped divider inside the container to define an upper chamber above the divider and a lower chamber below the divider; and
installing in the container a valve (28) having a valve control (29) for alternating the valve between an open and closed position, for controlling the flow of F.O.G. from the container into the storage tank.

13. The method of claim 12 including positioning the valve (28) at an elevation such that F.O.G. floating on water housed in the container (12) can flow from the container out through the valve when an effluent level in the container is raised above the valve level and the valve is opened.

14. The method of claim 12 or 13, including extending the divider (26) across the container (12) at a level below the static water level to allow water to flow below the divider (26) from the inlet (22) to the outlet (24) but retaining F.O.G. floating on the water and diagonally elevating at least a portion of the divider toward an opening so that F.O.G. will be directed toward the opening as it separates from water.

## Patentansprüche

1. Wirtschaftliche Fett-, Öl- und Schmiere- (F.Ö.S.)-Entfernungsanordnung (10) für die Verwendung in Küchen, aufweisend:
einen Behälter (12) mit einer Unterseite (16), einer Oberseite (18), mindestens einer Seitenwand (20), einem Einlass (22) zur Aufnahme eines Zuflusses von F.Ö.S. und Wasser aus einem Abfluss, und einem Auslass (24) zur Ableitung von Grauwasser aus dem Behälter (12), wobei der Einlass (22) und der Auslass (24) beabstandet oberhalb der Unterseite (16) und unterhalb der Oberseite (18) angeordnet sind, und
einen abnehmbaren, mit dem Behälter verbundenen Speichertank (14), der so angeordnet ist, dass er auf Wasser in dem Behälter schwimmendes F.Ö.S. beim Ausfließen aus dem Behälter aufnimmt,
**gekennzeichnet durch**:
ein Auslassleitblech (32), das angeordnet ist, um Grauwasser von einem unterem Abschnitt (23) des Behälters (12) über den Auslass (24) aus dem Behälter (12) zu leiten,
ein Ventil (28) in dem Behälter (12) auf einer derartigen Höhe, dass die auf Wasser in dem Behälter schwimmende F.Ö.S. aus dem Behälter durch das Ventil austritt, wenn ein Abwasserfüllstand in dem Behälter über die Ventilhöhe angehoben und das Ventil geöffnet wird,
eine Ventilsteuerung (29) zum Wechseln des Ventils zwischen einer offenen und einer geschlossenen Position, und
ein Portal (36) an dem Speichertank, das mit dem Ventil verbunden ist.

2. Anordnung (10) nach Anspruch 1, ferner aufweisend mindestens einen Teiler (26), der sich über den Behälter (12) bei einer Höhe unterhalb des statischen Wasserfüllstands erstreckt, damit Wasser unterhalb des Teilers vom Einlass (22) zum Auslass (24) strömen kann, aber auf dem Wasser schwimmendes F.Ö.S. zurückbehält,

3. Anordnung (10) nach einem der vorhergehenden Ansprüche, ferner aufweisend ein Einlassleitblech (30), das den Zufluss aus dem Abfluss in den Behälter leitet.

4. Anordnung (10) nach einem der vorhergehenden Ansprüche, wobei der Speichertank (14) aus rotationsgeformtem Kunststoff gefertigt ist und vertikale Verstärkungsrippen (60) aufweist.

5. Anordnung (10) nach einem der vorhergehenden Ansprüche, wobei der Behälter eine saubere Öffnung und horizontale Verstärkungsrippen aufweist.

6. Anordnung (10) nach einem der vorhergehenden Ansprüche, wobei die Ventilsteuerung (29) ein Ventilzug (29) zum Öffnen und Schließen des Ventils ist.

7. Anordnung (10) nach einem vorhergehenden Anspruch, wobei mindestens einer ausgewählt aus dem Behälter (12) und dem Speichertank (14) ein F.Ö.S. Füllstands-Sichtfenster (52) aufweisen.

8. Anordnung (10) nach einem der vorhergehenden Ansprüche, wobei der Speichertank (14) einen Tragegriff (56) auf der Oberseite (63) des Speichertanks (14) aufweist, der distal zum Schwerpunkt des Speichertanks in Richtung der Vorderseite des Speichertanks angeordnet ist, wobei das Aufheben des Speichertanks durch den Tragegriff das Gewicht des gelagerten F.Ö.S. versetzt und das Portal nach oben neigt, um ein Austreten des enthaltenen F.Ö.S. durch das Portal zu vermeiden.

9. Verfahren zum Entfernen von Fett, Öl und Schmiere (F.Ö.S.) aus Abwasser, aufweisend:
Verbinden eines Küchenabflusses mit einem Einlass (22) eines Behälters (12),
Verbinden einer Abwasserleitung mit einem Auslass (24) in dem Behälter (12), wobei der Auslass am Behälter angeordnet ist, um einen statischen Wasserfüllstand für Flüssigkeit in dem Behälter zu definieren, wobei der Behälter auch ein Auslassleitblech (32) aufweist, das angeordnet ist, um Grauwasser von einem unterem Abschnitt (23) des Behälters (12) über den Auslass (24) aus dem Behälter zu leiten,
Platzieren eines abnehmbaren Speichertanks (14) neben dem Behälter,
Verbinden eines Portals (36) an einem Speichertank mit einem Ventil (28) an dem Behälter,
Einleiten von F.Ö.S. enthaltendem Abwasser aus dem Küchenabfluss in den Einlass, Halten des F.Ö.S. enthaltenden Abwassers im Behälter für einen Zeitraum, damit F.Ö.S. an die Oberseite des enthaltenen Abwassers schwimmen kann,
Grauwasser aus dem Behälterauslass in die Abwasserleitung strömen lassen, intermittierend schwimmendes F.Ö.S. durch das Ventil in dem Behälter und in den Speichertank austreten lassen und Trennen der Verbindung zwischen dem Ventil und dem Portal durch austauschbare Entfernung des Speichertanks,
Entleeren der im Speichertank gelagerten F.Ö.S.,
Austauschen des Speichertanks neben dem Container, und
Wiederherstellen der Verbindung zwischen dem Ventil und dem Portal.

10. Verfahren zum Entfernen von F.Ö.S. aus Abwasser nach Anspruch 9, ferner aufweisend das Aufheben des Speichertanks (14) durch einen von dem Schwerpunkt wegweisenden und in Richtung des Portals angeordneten Tragegriff (56), so dass das Gewicht des gelagerten F.Ö.S. den Speichertanks so kippt, dass das Portal nach oben gerichtet ist, um ein Austreten des enthaltenen F.Ö.S. zu vermeiden.

11. Verfahren zum Entfernen von F.Ö.S. aus Abwasser nach einem der Ansprüche 9 oder 10, ferner aufweisend das Überwachen eines Sichtfensters (52) am Behälter (12), um zu bestimmen, wann der F.Ö.S. Füllstand innerhalb des Speichertanks (14) ausreichend ist, um das Entleeren des angesammelten F.Ö.S. in den Speichertank zu rechtfertigen.

12. Verfahren zur Herstellung einer Schmierfettentfernungsanordnung (10), aufweisend:
Formen eines Behälters (12) mit einer Unterseite (16), einer Oberseite (18) und mindestens einer Seitenwand (22);
Bilden eines Auslasses (24), der beabstandet oberhalb der Unterseite (16) und unterhalb der Oberseite (18) angeordnet ist, und eines Einlasses (22), der beabstandet oberhalb der Unterseite (16) und unterhalb der Oberseite (18) angeordnet ist, wobei der Einlass dazu eingerichtet ist, Wasser von einem Zufluss von F.Ö.S. aufzunehmen, und der Auslass dazu eingerichtet ist, um zu ermöglichen, dass Grauwasser aus dem Behälter austritt; und
Formen eines abnehmbaren Speichertanks (14) mit einem Portal (36) zur Aufnahme von F.Ö.S. aus dem Behälter; Montage des mit dem Behälter zu verbindenden Speichertanks;
**gekennzeichnet durch**:
Formen eines nach oben geformten Teilers (26) mit einer Öffnung an einer Spitze;
Anbringen eines Einlassleitblechs (30) und eines Auslassleitblechs (32) in dem Behälter, das so angeordnet ist, dass es Grauwasser aus einem unterem Abschnitt (23) des Behälters (12) über den Auslass (24) aus dem Behälter (12) leitet;
Einsetzen des nach oben geformten Teilers innerhalb des Behälters um eine obere Kammer über dem Teiler und eine untere Kammer unter dem Teiler zu definieren; und
Anbringen eines Ventils (28) in dem Behälter mit einer Ventilsteuerung (29) zum Wechseln des Ventils zwischen einer offenen und einer geschlossenen Position, zum Steuern des Flusses der F.Ö.S. aus dem Behälter in den Speichertank.

13. Verfahren nach Anspruch 12, aufweisend Positionieren des Ventils (28) in einer derartigen Höhe, dass die auf Wasser schwimmende in dem Behälter (12) untergebrachte F.Ö.S. aus dem Behälter heraus durch das Ventil fließen kann, wenn ein Abwasserfüllstand in dem Behälter über die Ventilhöhe angehoben und das Ventil geöffnet wird.

14. Verfahren nach Anspruch 12 oder 13, aufweisend das Verlängern des Teilers (26) über den Behälter (12) auf einer Höhe unterhalb des statischen Wasserfüllstands, um den Fluss von Wasser unterhalb des Teilers (26) von dem Einlass (22) zu dem Auslass (24) zu ermöglichen, wobei auf dem Wasser schwimmendes F.Ö.S. zurückbehalten wird und mindestens ein Abschnitt des Teilers diagonal zu einer Öffnung angehoben wird, so dass F.Ö.S. in Richtung der Öffnung geleitet wird, während er sich vom Wasser trennt.

## Revendications

1. Ensemble d'élimination économique pour graisses, huiles et corps gras (F.O.G) (10) destiné à être utilisé dans les cuisines, comprenant :
un récipient (12) ayant un fond (16), une partie supérieure (18), au moins une partie latérale (20), une entrée (22) pour recevoir un écoulement entrant de F.O.G et d'eau d'un drain, et une sortie (24) pour décharger les eaux grises du récipient (12), dans lequel l'entrée (22) et la sortie (24) sont espacées au-dessus du fond (16) et au-dessous de la partie supérieure (18), et
un réservoir de stockage amovible (14) se couplant avec le récipient et agencé pour accepter les F.O.G, flottant sur l'eau dans le récipient, qui sortent du récipient,
**caractérisé par** :
un déflecteur de sortie (32) agencé pour diriger les eaux grises d'une partie inférieure (23) du récipient (12) hors du récipient (12) via la sortie (24),
une valve (28) dans le récipient (12) à une hauteur de sorte que les F.O.G flottant sur l'eau dans le récipient sortent du récipient par la valve lorsqu'un niveau d'eaux résiduaires dans le récipient monte au-dessus du niveau de valve et que la valve est ouverte,
une commande de valve (29) pour faire alterner la valve entre une position ouverte et une position fermée, et
une porte (36) sur le réservoir de stockage qui s'interface avec la valve.

2. Ensemble (10) selon la revendication 1, comprenant en outre au moins un dispositif de division (26) s'étendant de part et d'autre du récipient (12) à un niveau au-dessous du niveau d'eau statique pour permettre à l'eau de s'écouler au-dessous du dispositif de division de l'entrée (22) à la sortie (24) mais retenant les F.O.G flottant sur l'eau.

3. Ensemble (10) selon l'une quelconque des revendications précédentes, comprenant en outre un déflecteur d'entrée (30) dirigeant l'écoulement entrant du drain dans le récipient.

4. Ensemble (10) selon l'une quelconque des revendications précédentes, dans lequel le réservoir de stockage (14) est réalisé à partir de plastique rotomoulé et a des nervures de renforcement verticales (60).

5. Ensemble (10) selon l'une quelconque des revendications précédentes, dans lequel le récipient comprend un orifice de nettoyage et a des nervures de renforcement horizontales.

6. Ensemble (10) selon l'une quelconque des revendications précédentes, dans lequel la commande de valve (29) est une tirette de valve (29) pour ouvrir et fermer la valve.

7. Ensemble (10) selon l'une quelconque des revendications précédentes, dans lequel au moins l'un parmi le récipient (12) et le réservoir de stockage (14) comprend un indicateur de niveau en verre de F.O.G (52).

8. Ensemble (10) selon l'une quelconque des revendications précédentes, dans lequel le réservoir de stockage (14) comprend une poignée de transport (56) sur la partie supérieure (63) du réservoir de stockage (14), agencée de manière distale par rapport au centre de gravité du réservoir de stockage vers la partie avant du réservoir de stockage, dans lequel le ramassage du réservoir de stockage par la poignée de transport incline le poids des F.O.G stockés, inclinant la porte vers le haut afin d'éviter le déversement des F.O.G enfermés, par la porte.

9. Procédé pour éliminer les graisses, des huiles et les corps gras (F.O.G) des eaux résiduaires comprenant les étapes suivantes :
raccorder une évacuation de cuisine à une entrée (22) d'un récipient (12),
raccorder un égout à une sortie (24) dans le récipient (12), la sortie étant positionnée sur le récipient afin de définir un niveau d'eau statique pour le liquide dans le récipient, le récipient comprenant également un déflecteur de sortie (32) agencé pour diriger les eaux grises d'une partie inférieure (23) du récipient (12) hors du récipient via la sortie (24),
placer un réservoir de stockage amovible (14) à proximité du réservoir,
interfacer une porte (36) sur un réservoir de stockage avec une valve (28) sur le récipient,
décharger les eaux résiduaires contenant les F.O.G de l'évacuation de cuisine dans l'entrée, maintenant les eaux résiduaires contenant les F.O.G à l'intérieur du récipient pendant une certaine période afin de permettre aux F.O.G de flotter sur la partie supérieure des eaux résiduaires contenues,
permettre aux eaux grises de s'écouler par la sortie de récipient dans l'égout, décharger de manière intermittente les F.O.G flottant par la valve dans le récipient et dans le réservoir de stockage, séparant l'interface entre la valve et la porte en retirant de manière remplaçable le réservoir de stockage,
vider les F.O.G stockés dans le réservoir de stockage,
replacer le réservoir de stockage à côté du récipient, et
rétablir l'interface entre la valve et la porte.

10. Procédé pour éliminer les F.O.G des eaux résiduaires selon la revendication 9, comprenant en outre le ramassage du réservoir de stockage (14) par une poignée de transport (56) agencée à distance du centre de gravité et vers la porte de sorte que le poids des F.O.G stockés incline le réservoir de stockage, donc la porte est orientée vers le haut pour éviter le déversement des F.O.G enfermés.

11. Procédé pour éliminer les F.O.G des eaux résiduaires selon la revendication 9 ou 10, comprenant en outre l'étape pour surveiller un indicateur en verre (52) sur le récipient (12) afin de déterminer le moment où le niveau de F.O.G dans le réservoir de stockage (14) est suffisant pour garantir le vidage des F.O.G accumulés dans le réservoir de stockage.

12. Procédé pour fabriquer un ensemble d'élimination de graisses (10) comprenant les étapes suivantes :
mouler un récipient (12) ayant un fond (16), une partie supérieure (18) et au moins une partie latérale (22) ;
former une sortie (24) espacée au-dessus du fond (16) et au-dessous de la partie supérieure (18) et une entrée (22) espacée au-dessus du fond et au-dessous de la partie supérieure, dans lequel l'entrée est adaptée pour recevoir l'eau d'un écoulement entrant de F.O.G et la sortie est adaptée pour permettre de décharger les eaux grises du récipient ; et
mouler un réservoir de stockage (14) amovible avec une porte (36) pour recevoir les F.O.G du récipient ; monter le réservoir de stockage à coupler avec le récipient ;
**caractérisé par** les étapes suivantes :
mouler un dispositif de division (26) formé vers le haut ayant une ouverture au niveau d'un sommet ;
installer dans le récipient, un déflecteur d'entrée (30) et un déflecteur de sortie (32) agencé pour diriger les eaux grises d'une partie de fond (23) du récipient (12) hors du récipient (12) via la sortie (24) ;
insérer le dispositif de division formé vers le haut à l'intérieur du récipient pour définir une chambre supérieure au-dessus du dispositif de division et une chambre inférieure au-dessous du dispositif de division ; et
installer dans le récipient, une valve (28) ayant une commande de valve (29) pour alterner la valve entre une position ouverte et une position fermée, pour commander l'écoulement de F.O.G du récipient dans le réservoir de stockage.

13. Procédé selon la revendication 12, comprenant l'étape pour positionner la valve (28) à une certaine hauteur de sorte que les F.O.G flottant sur l'eau logés dans le récipient (12) peuvent s'écouler du récipient en sortant par la valve lorsqu'un niveau d'eaux résiduaires dans le récipient monte au-dessus du niveau de valve et que la valve est ouverte.

14. Procédé selon la revendication 12 ou 13, comprenant l'étape pour étendre le dispositif de division (26) de part et d'autre du récipient (12) à un niveau au-dessous du niveau d'eau statique pour permettre à l'eau de s'écouler au-dessous du dispositif de division (26) de l'entrée (22) à la sortie (24) mais retenir les F.O.G flottant sur l'eau et lever en diagonale au moins une partie du dispositif de division vers une ouverture de sorte que les F.O.G sont dirigés vers l'ouverture lorsqu'ils se séparent de l'eau.
